# EUROPÄISCHE PATENTSCHRIFT

(11) **EP 0 862 252 B1**
(45) Veröffentlichungstag und Bekanntmachung des Hinweises auf die Patenterteilung: **29.10.2003**
(21) Anmeldenummer: 98102574.5
(22) Anmeldetag: 14.02.1998
(51) Int. Cl.: H02B 1/38

(54) **Schrank zur Aufnahme von elektrischen und elektronischen Komponenten**
Cabinet for electric and electronic elements
Armoire pour composants électriques et électroniques

(30) Priorität: 27.02.1997 DE 19707929
(43) Veröffentlichungstag der Anmeldung: 02.09.1998
(73) Patentinhaber: Schroff GmbH, D-75334 Straubenhardt (DE)
(72) Erfinder: Rieger, Uwe, 76307 Karlsbad (DE)
(74) Vertreter: Durm, Klaus, Dr.-Ing.

(56) Entgegenhaltungen:
- WO-A-93/10692
- DE-C- 4 224 468
- FR-A- 2 690 792
- US-A- 2 805 740
- US-A- 5 202 818
- US-A- 5 561 886

## Beschreibung

Die Erfindung betrifft einen Schrank zur Aufnahme von elektrischen und elektronischen Komponenten, mit einem Rahmengestell, an dem ein Türblatt mit einem Scharnier sowie Wandelemente lösbar befestigt sind, wobei das Scharnier mindestens einen an einem Seitenholm des Rahmengestells befestigten feststehenden Abschnitt sowie mindestens einen am Türblatt befestigten schwenkbaren Abschnitt aufweist, und die Schwenkachse des Scharniers im Bereich der Türblattaußenseite angeordnet ist und wobei ein seitliches Wandelement an den feststehenden Abschnitten des Scharniers befestigt ist.

Schränke der erwähnten Art finden Verwendung.als Schaltschränke in der Elektrotechnik oder als Elektronikschränke. Das Rahmengestell eines solchen Schranks trägt üblicherweise Baugruppenträger sowie sonstige Einbau- und Einschubelemente und bildet das tragende Gerüst des Schranks. Durch Anbringen von Wandelementen und einer Tür am Rahmengestell wird das Schrankgehäuse hergestellt, welches den Schrankinhalt optisch abdeckt, mechanisch schützt und gegebenenfalls elektromagnetisch abschirmt.

Aus der DE 94 03 989 U1, die ein Scharnier beschreibt, ist ein Schaltschrank mit einem Schrankgehäuse und einem Türblatt bekannt, wobei das Türblatt im Bereich des Scharniers eine Abkantung aufweist und die Schwenkachse des Scharniers im Bereich der Türblattaußenseite liegt.

Die DE 39 30 134 C2 zeigt ein nach vorne offenes Gehäuse (Baugruppenträger oder Schaltschrank) mit Rahmenelementen, an denen ein Türblatt mit einem Scharnier lösbar befestigt ist, wobei die Schwenkachse des Scharniers ebenfalls im Bereich der Türblattaußenseite angeordnet ist.

Aus der DE 93 04 072 U1 und aus der DE 42 24 468 C1 ist jeweils ein Schrank der eingangs genannten Art bekannt, nämlich ein Schaltschrank mit einem Rahmen, an dem ein Türblatt mit einem Scharnier sowie Wandelemente befestigt sind, wobei die Schwenkachse des Scharniers im Bereich der Türblattaußenseite angeordnet ist.

Die WO 93/10692 beschreibt einen umstrukturierbaren Schrank mit einem Rahmengestell für Einrichtungen zur Aufnahme elektrischer Komponenten, welches Wandelemente sowie eine Tür aufweist. Das Türblatt ist mittels mehrerer Scharniere am Rahmen angeschlagen. Mit Hilfe von Befestigungselementen in Gestalt von Schrauben sind die feststehenden Scharnierteile am Rahmen gehalten, während die schwenkbaren Teile am Türblatt befestigt sind. Die Schwenkachsen der Scharniere sind im Bereich der Innenseite des Türblattes vorgesehen.

Aus optischen Gründen, vor allem aber um einen unbefugten Zugriff auf den Schrankinhalt zu verhindern, müssen das Türblatt und die Wandelemente mit ausschließlich von innen zugänglichen Befestigungselementen am Rahmengestell angebracht sein. Hierzu ist ein freier Zugang von der Innenseite des Schranks zu den genannten Befestigungselementen notwendig. Um den freien Zugang bei einem bestückten Schrank zu ermöglichen, müssen jedoch die Einschübe oder Einbauten zuvor ausgebaut und herausgenommen und anschließend wieder eingebaut werden.

Der Erfindung liegt die Aufgabe zugrunde, einen Schrank der eingangs genannten Art so zu konzipieren, dass es möglich ist, dessen Wandelemente im Bereich des Türblatts zu befestigen, dass sie auch bei vollständiger Bestückung des Schrankes ab- und anmontierbar sind, ohne Einschübe oder Einbauten herausnehmen zu müssen und die Befestigungselemente für das Scharnier nur bei geöffneter Schranktür zugänglich sind.

Diese Aufgabe ist durch einen Schrank mit den Merkmalen des Anspruches 1 gelöst. Durch die vorgeschlagenen Überdeckungen der ersten und zweiten Befestigungselemente bei geschlossener Tür sind diese ausschließlich nur nach Entfernung des Türblattes zu erreichen. Die Schwenkachse des Scharniers, mit welchem das Türblatt am Seitenholm eines erfindungsgemäßen Schranks befestigt ist, ist im Bereich der Türblattäußenseite angeordnet. Die Schwenkachse ist dem Seitenholm also derart vorgelagert, dass der dem Scharnier zugeordnete Randbereich des Türblatts im geschlossenen Zustand im wesentlichen zwischen der Schwenkachse und dem Seitenholm sitzt. Zum Öffnen des Schranks wird das Türblatt um die an dessen Außenseite angeordnete Schwenkachse geschwenkt, wodurch die Schmalseite des Türblatts einen Kreisbogen beschreibt und sich somit vom Seitenholm weg bewegt. Die Schmalseite des Türblatts gibt also beim Öffnen der Türe einen Bereich des Scharniers zwischen der Scharnierachse und dem Seitenholm frei, an dem ein seitliches Wandelement derart befestigt werden kann, dass die Befestigungselemente nur bei geöffneter Schranktür zugänglich sind. Diese Zugänglichkeit ist auch bei voll bestücktem Schrank gewährleistet, da die Einbauten selbstverständlich nur bis maximal zur Innenseite des Türblatts heranreichen.

Nach der Erfindung wird also die Gesamtdicke des Türblatts als zusätzlicher, vom Innenraum getrennter, aber von außen nicht zugänglicher Bereich genutzt, in welchem die Befestigung zumindest eines seitlichen Wandelements erfolgen kann. Dabei ist es möglich, die Befestigung so stabil auszubilden, dass das seitliche Wandelement zusätzliche Aggregate, wie einen Wärmetauscher, ein Kühlgerät oder eine Kabeleingangsbox aufweisen kann.

Das seitliche Wandelement kann auch insgesamt durch solche Anbauteile, die dann speziell angepasst sein müssen, ersetzt werden.

Das seitliche Wandelement kann auch eine Seitentür sein, wobei diese vorzugsweise an mindestens einem weiteren schwenkbaren Abschnitt des Scharniers befestigt ist und sich somit um dieselbe Schwenkachse wie das frontseitige Türblatt schwenken lässt.

Zur besseren Abdichtung gegen eindringenden Staub oder Feuchtigkeit ist es zweckmäßig, sowohl zwischen dem Seitenholm und dem seitlichen Wandelement als auch zwischen dem Türblatt und dem Seitenholm jeweils ein Dichtungselement anzuordnen, das beispielsweise aus Gummi bestehen kann. Es ist auch denkbar, anstatt der genannten Dichtungselemente Kontaktelemente zur HF-Abschirmung vorzusehen.

Ein Ausführungsbeispiel der Erfindung wird im folgenden anhand der beigefügten Zeichnungen näher erläutert. Es zeigen:
- Figur 1: eine perspektivische Explosionsdarstellung eines Teils eines Scharniers eines erfindungsgemäßen Schranks mit Seitenholm, Türblatt und seitlichem Wandelement;
- Figur 2: eine Schnittdarstellung entlang der Linie II-II gemäß Figur 1;
- Figur 3: eine Schnittdarstellung entlang der Linie III-III gemäß Figur 1.

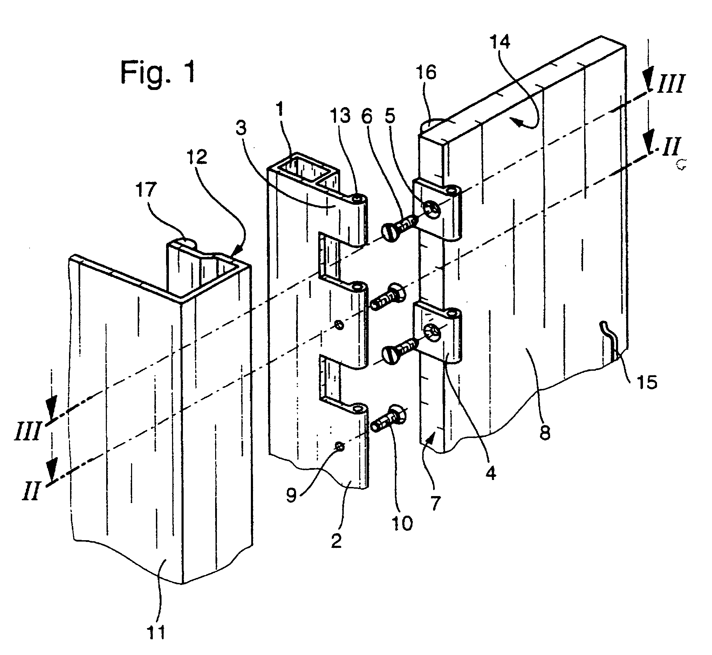

Figur 1 zeigt einen Seitenholm 1 eines (nicht dargestellten) Rahmengestells eines erfindungsgemäßen Schranks. Der Seitenholm 1 trägt ein Scharnier 2 mit feststehenden Abschnitten 3 und in deren Aussparungen passenden schwenkbaren Abschnitten 4. Die feststehenden Abschnitte 3 des Scharniers 2 können am Seitenholm 1 angeformt oder auf geeignete Weise daran befestigt sein.

In den schwenkbaren Abschnitten 4 des Scharniers 2 sind Bohrungen 5 vorhanden, durch welche jeweils eine Schraube 6 in eine Schmalseite 7 eines Türblatts 8 eingedreht wird.

Die feststehenden Abschnitte 3 des Scharniers 2 weisen Bohrungen 9 auf, durch welche jeweils eine Schraube 10 in ein seitliches Wandelement 11 eingedreht wird. Dieses liegt mit seiner Anlagefläche 12 am Scharnier 2 an.

Die Schwenkachse 13 des Scharniers 2 ist vom Seitenholm 1 beabstandet, und zwar so, daß sie, wenn die Türe geschlossen ist, noch vor der Türblattaußenseite 14 liegt.

Am Türblatt 8 ist schließlich noch ein Griff 15 sowie ein Dichtungselement 16 zu erkennen. Das seitliche Wandelement 11 trägt ein entsprechendes Dichtungselement 17.

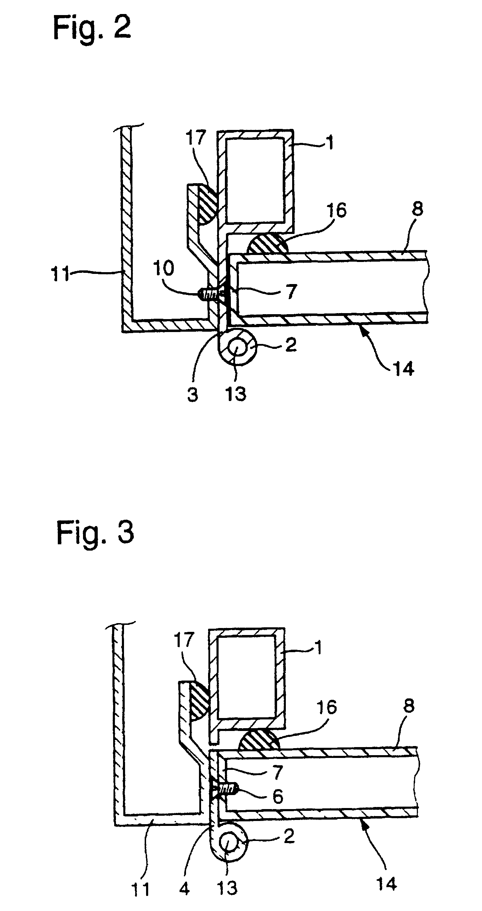

Figur 2 zeigt die in Figur 1 dargestellte Anordnung im zusammengebauten Zustand als Schnitt entlang der Linie II-II. Der Seitenholm 1 ist im vorliegenden Beispiel einstückig mit dem hier sichtbaren feststehenden Abschnitt 3 des Scharniers 2 verbunden. Das Türblatt 8 überdeckt mit seiner Schmalseite 7 die Schraube 10, welche das seitliche Wandelement 11 mit dem feststehenden Abschnitt 3 des Scharniers 2 lösbar verbindet. Im dargestellten geschlossenen Zustand des Schranks ist daher die Schraube 10, welche als erstes Befestigungselement für das seitliche Wandelement 11 dient, nicht zugänglich.

Figur 2 verdeutlicht schließlich auch die Lage der Dichtungselemente 16 und 17 bei geschlossener Türe.

Figur 3 zeigt eine Schnittdarstellung der in Figur 1 dargestellten Anordnung entlang der Linie III-III. Hier ist der schwenkbare Abschnitt 4 des Scharniers 2 zu sehen, der mit dem Seitenholm 1 nur indirekt über die Schwenkachse 13 des Scharniers 2 verbunden ist. Der schwenkbare Abschnitt 4 des Scharniers 2 ist mittels der Schraube 6 an der Schmalseite 7 des Türblatts 8 angebracht, wobei im dargestellten geschlossenen Zustand der Türe das seitliche Wandelement 11 den schwenkbaren Abschnitt 4 des Scharniers 2, und somit auch die Schraube 6, überdeckt. Die Schraube 6, welche als weiteres Befestigungselement zum Befestigen des Türblatts 8 am schwenkbaren Abschnitt 4 des Scharniers 2 dient, ist bei geschlossener Türe also ebenfalls nicht zugänglich.

Wie eine Betrachtung der Figuren 1 bis 3 zeigt, werden die Schrauben 6 und 10 bei geöffneter Türe leicht zugänglich, da die Schwenkachse 13 des Scharniers 2 der Türblattaußenseite 14 vorgelagert ist und sich (wenn die Türe ganz geöffnet ist) eine weite Öffnung des Zwischenraums zwischen der Schwenkachse 13 und dem Seitenholm 1 ergibt, wobei die Schrauben 6 und 10 beim Öffnen des Schranks jeweils eine kreisbogenförmige Bewegung beschreiben. Die Befestigungen des Türblatts 8 und des seitlichen Wandelements 11 am Seitenholm 1 des (nicht dargestellten) Rahmengestells sind also von außen nicht zugänglich. Gleichzeitig ist ein Lösen dieser Befestigungen bei geöffneter Schranktüre leicht möglich, ohne den Schrankinhalt verändern zu müssen.

### Zusammenstellung der Bezugszeichen

- 1: Seitenholm
- 2: Scharnier
- 3: feststehender Abschnitt (von 2)
- 4: schwenkbarer Abschnitt (von 2)
- 5: Bohrung (in 4)
- 6: Schraube
- 7: Schmalseite (von 8)
- 8: Türblatt
- 9: Bohrung (in 3)
- 10: Schraube
- 11: seitliches Wandelement
- 12: Anlagefläche (von 11)
- 13: Schwenkachse (von 2)
- 14: Türblattaußenseite
- 15: Griff
- 16: Dichtungselement
- 17: Dichtungselement

## Patentansprüche

1. Schrank zur Aufnahme von elektrischen und elektronischen Komponenten, mit einem Rahmengestell, an dem ein Türblatt (8) mit einem Scharnier (2) sowie Wandelemente lösbar befestigt sind, wobei das Scharnier (2) mindestens einen an einem Seitenholm (1) des Rahmengestells befestigten feststehenden Abschnitt (3) sowie mindestens einen am Türblatt (8) befestigten schwenkbaren Abschnitt (4) aufweist, und die Schwenkachse (13) des Scharniers (2) im Bereich der Türblattaußenseite (14) angeordnet ist und wobei ein seitliches Wandelement (11) an den feststehenden Abschnitten (3) des Scharniers (2) befestigt ist, **dadurch gekennzeichnet,**
- **dass** das seitliche Wandelement (11) mit ersten Befestigungselementen (10) befestigt ist, welche an der vom seitlichen Wandelement (11) abgewandten Seite der feststehenden Abschnitte (3) des Scharniers (2) zugänglich und zwischen der Schwenkachse (13) des Scharniers (2) und dem Seitenholm (1) angeordnet sind,
- **dass** die ersten Befestigungselemente (10) bei geschlossener Türe von der Schmalseite (7) des Türblatts (8) überdeckt sind, und
- **dass** das Türblatt (8) mittels weiterer Befestigungselemente (6) an den schwenkbaren Abschnitten (4) des Scharniers (2) befestigt ist, wobei die weiteren Befestigungselemente (6) bei geschlossener Türe vom seitlichen Wandelement (11) überdeckt und zwischen der Schwenkachse (13) des Scharniers (2) und dem Seitenholm (1) angeordnet sind,
- so dass die Befestigungselemente (10 und 6) nur bei geöffneter Türe des Schrankes zugänglich sind.

2. Schrank nach Anspruch 1, **dadurch gekennzeichnet, dass** das seitliche Wandelement (11) durch ein Anbauteil ersetzt ist.

3. Schrank nach Anspruch 1, **dadurch gekennzeichnet, dass** das seitliche Wandelement (11) eine Seitentür ist.

4. Schrank nach Anspruch 3, **dadurch gekennzeichnet, dass** an der Seitentür mindestens ein weiterer zusätzlicher Abschnitt des Scharniers (2) befestigt ist.

5. Schrank nach einem der Ansprüche 1 bis 4, **dadurch gekennzeichnet, dass** zwischen dem seitlichen Wandelement (11) und dem Seitenholm (1) ein Dichtungselement (17) angeordnet ist.

6. Schrank nach einem der Ansprüche 1 bis 5, **dadurch gekennzeichnet, dass** zwischen dem Türblatt (8) und dem Seitenholm (1) ein weiteres Dichtungselement (16) angeordnet ist.

## Claims

1. A cabinet for accommodating electric and electronic components, with a framework, to which a door plate (8) - via a hinge (2) - and wall elements are releasably connected, wherein the hinge (2) has at least one fixed section (3) secured to a lateral beam (1) of the framework as well as at least one pivotable section (4) secured to the door plate (8), the pivotal axis (13) of the pivot (2) being arranged in the region of the outer side (14) of the door plate, and wherein a lateral wall element (11) is secured to the fixed section (3) of the hinge (2), **characterised in that**
- the lateral wall element (11) is secured with first fixing elements (10) which are accessible from fhe side of the fixed section (3) of the hinge (2) that is remote from the lateral wall element (11) and are arranged between the pivotal axis (13) of the pivot (2) and the lateral beam (1),
- the first fixed elements (10) are covered over by the narrow side (7) of the door plate (8) when the door is closed,
- the door plate (8) is secured by way of further fixing elements (6) to the pivotable sections (4) of the hinge, wherein the fixing elements (6) are covered over by the lateral wall element (11) when the door is closed and arranged between the pivotal axis (13) of the pivot (2) and the lateral beam (1),
- so that the fixing elements (10 and 6) are accessible only when the door of the cabinet is open.

2. A cabinet according to claim 1, **characterised in that** the lateral wall element (11) is replaced by a mounting part.

3. A cabinet according to claim 1, **characterised in that** the lateral wall element (11) is a side door.

4. A cabinet according to claim 3, **characterised in that** a further additional section of the hinge (2) is secured to the side door.

5. A cabinet according to one of claims 1 to 4, **characterised in that** a sealing element (17) is arranged between the lateral wall element (11) and the lateral beam (1).

6. A cabinet according to one of claims 1 to 5, **characterised in that** a further sealing element (16) is arranged between the door plate (8) and the lateral beam (1).

## Revendications

1. Armoire pour composants électriques et électroniques, comprenant un châssis sur lequel sont fixés de façon amovible un vantail de porte (8) avec une charnière (2) ainsi que des éléments de paroi, la charnière (2) présentant au moins une section stationnaire (3) fixée sur un longeron latéral (1) du châssis, ainsi qu'au moins une section pivotante (4) fixée sur le vantail de porte (8), l'axe de pivotement (13) de la charnière (2) étant disposé dans la zone du côté extérieur (14) du vantail de porte, et un élément de paroi latéral (11) étant fixé sur les sections stationnaires (3) de la charnière (2), **caractérisée en ce que**
- l'élément de paroi latéral (11) est fixé par des premiers éléments de fixation (10), qui sont accessibles sur le côté des sections stationnaires (3) de la charnière (2) opposé à l'élément de paroi latéral (11) et sont disposés entre l'axe de pivotement (13) de la charnière (2) et le longeron latéral (1),
- les premiers éléments de fixation (10) sont recouverts par le petit côté (7) du vantail de porte (8) en position de fermeture de la porte, et
- le vantail de porte (8) est fixé au moyen d'autres éléments de fixation (6) sur les sections pivotantes (4) de la charnière (2), les autres éléments de fixation (6) étant recouverts par l'élément de paroi latéral (11) en position de fermeture de la porte et étant disposés entre l'axe de pivotement (13) de la charnière (2) et le longeron latéral (1),
- de sorte que les éléments de fixation (10 et 6) ne sont accessibles qu'en position d'ouverture de la porte de l'armoire.

2. Armoire suivant la revendication 1, **caractérisée en ce que** l'élément de paroi latéral (11) est remplacé par une pièce rapportée.

3. Armoire suivant la revendication 1, **caractérisée en ce que** l'élément de paroi latéral (11) est une porte latérale.

4. Armoire suivant la revendication 3, **caractérisée en ce qu'**au moins une autre section supplémentaire de la charnière (2) est fixée sur la porte latérale.

5. Armoire suivant l'une des revendications 1 à 4, **caractérisée en ce qu'**un élément d'étanchéité (17) est disposé entre l'élément de paroi latéral (11) et le longeron latéral (1).

6. Armoire suivant l'une des revendications 1 à 5, **caractérisée en ce qu'**un autre élément d'étanchéité (16) est disposé entre le vantail de porte (8) et le longeron latéral (1).
